# EUROPÄISCHE PATENTANMELDUNG

(11) **EP 0 810 253 A2**
(43) Veröffentlichungstag der Anmeldung: **03.12.1997**
(21) Anmeldenummer: 97107022.2
(22) Anmeldetag: 28.04.1997
(51) Int. Cl.: C08G 77/38, E04D 5/10, E04D 5/14

(54) **Selbstklebende Dichtungsbahn zum Feuchtigkeitsschutz von Bauten**

(30) Priorität: 31.05.1996 DE 29609679 U
(71) Anmelder: Bischof und Klein GmbH & Co., D-49525 Lengerich (DE)
(72) Erfinder: Wedi, Johannes, 48282 Emsdetten (DE)
(74) Vertreter: Busse & Busse Patentanwälte

(57) **Zusammenfassung**

Eine selbstklebende Dichtungsbahn zum Feuchtigkeitsschutz von Bauten besteht aus einer Trägerfolie mit einer Schicht eines kaltklebenden Klebstoffes und einer die Klebstoffschicht abdeckenden Abdeckfolie. Die Trägerfolie ist auf ihrer der Klebstoffschicht zugewandten Seite durch einen Siliconauftrag als Trennfolie ausgebildet. Der Siliconauftrag ist von einem durch UV-Bestrahlung ausgehärteten Lack aus einem Gemisch von epoxyfunktionellen Silicon-Polymeren und einem Photoinitiator für eine kationische, UV-initiierte Polymerisation des Gemisches gebildet.

## Beschreibung

Die Erfindung betrifft eine selbstklebende Dichtungsbahn zum Feuchtigkeitsschutz von Bauten, bestehend aus einer Trägerfolie mit einer Schicht eines kaltklebenden Klebstoffes und einer die Klebstoffschicht abdeckenden Abdeckfolie, wobei die Trägerfolie auf ihrer der Klebstoffschicht zugewandten Seite durch einen Siliconauftrag als Trennfolie ausgebildet ist.

Derartige selbstklebende Dichtungsbahnen finden bei Bauten vorwiegend im Dachbereich als Schutz vor einem Eindringen von Niederschlägen in das Gebäude und als Grundwasserschutz Anwendung. Der kaltklebende Klebstoff besteht dabei üblicherweise aus Bitumen und kann eine gelege-, gewebe- oder vliesartige Trägereinlage umfassen. Die durch den Siliconauftrag zugleich als Trennfolie ausgebildete Trägerfolie besteht in der Regel aus einer Polyethylenfolie oder einem Verbundmaterial aus Polyethylen/Papier/Polyethylen. Die Abdeckfolie auf dem Bitumen, beispielsweise in Form einer Polyethylenterephthalat- oder Polyesterfolie, ermöglicht eine Lagerung des Bahnmaterials in Rollenform. Zur Verarbeitung der Dichtungsbahn wird die als Trennfolie ausgebildete Trägerfolie entfernt, und die Abdeckfolie mit dem freigelegten selbstklebenden Bitumen wird auf die abzudichtende Fläche aufgebracht.

Der Siliconauftrag erfolgt bei den bekannten selbstklebenden Dichtungsbahnen durch eine Beschichtung mit dem in einem Lösungsmittel gelösten Silicon, und nach dem Abdampfen des Lösungsmittels hat der Siliconauftrag seinen Gebrauchszustand erreicht, und die Dichtungsbahn wird durch Auftrag des Bitumens und der Abdeckfolie fertiggestellt und auf Rolle gewickelt. In Abhängigkeit von den Lagerbedingungen und der Lagerzeit der auf Rolle gewickelten Bitumen-Selbstklebebahnen erhöht sich die Haftverbindung der Bitumenmasse mit der den Siliconauftrag als Trennmittel umfassenden Trägerfolie im Laufe der Zeit immer mehr, so daß die Trägerfolie schließlich nur noch unter sehr hohem Kraftaufwand, oder z.T. gar nicht mehr, von der Bitumenfläche gelöst werden kann. Außerdem ist beobachtet worden, daß das Silicon der Trägerfolie im Laufe der Zeit in die Bitumenschicht migriert, und umgekehrt Monomeranteile aus dem Bitumen über das Silicon in das Polyethylen der Trägerfolie migrieren. Hierdurch werden die Haftungseigenschaften der bituminösen kaltklebenden Schicht, nach dem Entfernen der Trägerfolie, negativ beeinflußt. Dies führt dazu, daß in dieser Weise mit einem Siliconauftrag als Trennmittel ausgerüstete Bitumen-Selbstklebebahnen nur zeitlich begrenzt und unter bestimmten Lagervoraussetzungen bevorratet werden können, um eine einwandfreie Verwendung zu gewährleisten.

Der Erfindung liegt die Aufgabe zugrunde, eine Dichtungsbahn der eingangs angegebenen Art zu schaffen, bei der, auch nach längerer Lagerzeit, ein einfaches Ablösen der Trägerfolie von der Klebstoffschicht gewährleistet und eine nachteilige Beeinflussung der Haftungseigenschaften der Kleberschicht vermieden ist.

Diese Aufgabe wird nach der Erfindung dadurch gelöst, daß der Siliconauftrag von einem durch UV-Bestrahlung ausgehärteten Lack aus einem Gemisch von epoxyfunktionellen Silicon-Polymeren und einem Photoinitiator für eine katonische UV-initiierte Polymerisation des Gemisches gebildet ist. Bei dieser Ausgestaltung findet unter dem Einfluß der UV-Bestrahlung eine vollständige, durchgehende Reaktion des Lackauftrages statt, die dessen vollständige Aushärtung bewirkt. In ihrem Gebrauchszustand liegt die Siliconlackschicht glasähnlich auf der Oberfläche der Trägerschicht auf und besitzt eine ausgezeichnete Trennwirkung gegenüber der sodann aufgetragenen Klebstoff- bzw. Bitumenschicht. Wird die durch die Abdeckfolie vervollständigte Dichtungsbahn sodann auf Rolle gewickelt, geht der Siliconlack auch bei längerer Lagerung keine Reaktion mit dem Bitumen ein, so daß die Trägerfolie im Anwendungsfall ohne Mühe rückstandslos von der Bitumenschicht entfernt werden kann. Es ergeben sich auf diese Weise gleichbleibende Schälwerte unabhängig von den Lagerbedingungen und der Lagerzeit, die niedriger sind als bei den bekannten selbstklebenden Dichtungsbahnen, bei denen das Trennmittel der Trägerfolie durch übliche lösungsmittelhaltige Siliconsysteme gebildet wird, und eine Migration von Monomeranteilen der bituminösen Masse in die Trägerfolie ist praktisch ausgeschlossen.

Das erfindungsgemäße Gemisch von epoxyfunktionellen Silicon-Polymeren und einem aus der Diaryliodonium-, Triarylsulfonium- und Ferroceniumsalze umfassenden Gruppe ausgewählten Photoinitiator, vorzugsweise einem Iodonium-Hexafluoroantimonatsalz, reagiert durch die UV-Bestrahlung nach einem kationischen Polymerisationsmechanismus. Bei einer solchen kationischen, UV-initiierten Polymerisation handelt es sich im Prinzip um die Polymerisation von oxirangruppenhaltigen Molekülen durch blockierte Lewis- oder Brönstedt-Säuren, die durch die UV-Strahlen deblockiert werden und Säure freistellen, die dann die Oxiranmoleküle über einen Mechanismus entsprechend der konventionellen Härtung von Epoxidharzen mit ähnlichen Säuren polymerisiert. Es wird hier das Prinzip einer Photoinitiierung einer ionischen Polymerisation genutzt, bei der über die angegebenen Photoinitiatoren durch die UV-Strahlung Ionen erzeugt werden, die eine kationische Polymerisation der hierfür zur Verfügung stehenden Oligomeren und Monomeren einleiten.

Für einen einfachen Beschichtungsauftrag auf die der Klebstoffschicht zuzuwendenden Seite der Trägerfolie wird das Gemisch aus den Silicon-Polymeren und dem Photoinitiator in einem organischen Lösungsmittel, vorzugsweise einem Diol, gelöst, was einen vollflächigen Beschichtungsauftrag mit einfachen mechanischen Mitteln, z.B. nach dem Flexodruckprinzip, ermöglicht. Um die aufgetragene Lackschicht in ihren ausgehärteten Gebrauchszustand zu überführen, erfolgt anschließend, wie eingangs erwähnt, die UV-Bestrahlung zur Durchführung der kationischen Polymerisation des Gemisches.

Aufgrund der ausgezeichneten Trennwirkung, die der erfindungsgemäße Siliconauftrag als Trennmittel auf der Trägerfolie entfaltet, können neben einem Bitumenklebstoff auch andere stark selbstklebende Klebstoffe als Klebstoffschicht auf die Trägerfolie aufgetragen werden, z.B. Butylklebstoffe, Acrylate oder kautschukhaltige Klebstoffe.

In allen Fällen empfiehlt es sich, die Trägerfolie zweischichtig schwarz/weiß mit der Schwarzfärbung auf ihrer von der Klebstoffschicht abgewandten Seite auszulegen, wodurch die Klebstoffschicht einen UV-Lichtschutz erhält. Die Trägerfolie kann dabei, wie an sich bekannt, von einer Polyethylenfolie gebildet sein, oder es kommen Kombinationen aus Vlies mit einer PE- oder PP-Beschichtung zum Einsatz, da diese Materialien höhere Festigkeiten besitzen und, wie bei bestimmten Anwendungen erwünscht, bleibende Dehnungen aufnehmen können.

## Patentansprüche

1. Selbstklebende Dichtungsbahn zum Feuchtigkeitsschutz von Bauten, bestehend aus einer Trägerfolie mit einer Schicht eines kaltklebenden Klebstoffes und einer die Klebstoffschicht abdeckenden Abdeckfolie, wobei die Trägerfolie auf ihrer der Klebstoffschicht zugewandten Seite durch einen Siliconauftrag als Trennfolie ausgebildet ist, dadurch gekennzeichnet, daß der Siliconauftrag von einem durch UV-Bestrahlung ausgehärteten Lack aus einem Gemisch von epoxyfunktionellen Silicon-Polymeren und einem Photoinitiator für eine kationische, UV-initiierte Polymerisation des Gemisches gebildet ist.

2. Dichtungsbahn nach Anspruch 1, dadurch gekennzeichnet, daß der Photoinitiator aus der Diaryliodonium-, Triarylsulfonium- und Ferroceniumsalze umfassenden Gruppe ausgewählt ist.

3. Dichtungsbahn nach Anspruch 1 oder 2, dadurch gekennzeichnet, daß der Photoinitiator von einem Iodonium-Hexafluoroantimonatsalz gebildet ist.

4. Dichtungsbahn nach einem der Ansprüche 1 bis 3, dadurch gekennzeichnet, daß das Gemisch aus Silicon-Polymeren und dem Photoinitiator in seiner Ausbildung als auftragsfähiger Lack in einem organischen Lösungsmittel gelöst ist.

5. Dichtungsbahn nach Anspruch 4, dadurch gekennzeichnet, daß das Lösungsmittel von einem Diol gebildet ist.

6. Dichtungsbahn nach einem der Ansprüche 1 bis 5, dadurch gekennzeichnet, daß der kaltklebende Klebstoff aus der Butyl-, Bitumen-, Acrylat- und kautschukhaltige Klebstoffe umfassenden Gruppe ausgewählt ist.

7. Dichtungsbahn nach einem der Ansprüche 1 bis 6, dadurch gekennzeichnet, daß die Trägerfolie auf ihrer von der Klebstoffschicht abgewandten Seite schwarz eingefärbt ist.
